# FASCICULE DE BREVET EUROPEEN

(11) **EP 3 428 044 B1**
(45) Date de publication et mention de la délivrance du brevet: **01.04.2020**
(21) Numéro de dépôt: 18178759.9
(22) Date de dépôt: 20.06.2018
(51) Int. Cl.: B62D 21/11, B62D 29/00

(54) **BERCEAU EN ALUMINIUM À MOYENS DE GUIDAGE DE TRIANGLES DE ROUE, POUR UN VÉHICULE**
ALUMINIUMTRÄGER MIT FÜHRUNGSMITTELN DES RADTRÄGERS FÜR EIN FAHRZEUG
ALUMINIUM CRADLE WITH MEANS FOR GUIDING WHEEL CARRIERS, FOR A VEHICLE

(30) Priorité: 13.07.2017 FR 1756654
(43) Date de publication de la demande: 16.01.2019
(73) Titulaire: PSA Automobiles SA, 78300 Poissy (FR)
(72) Inventeur: CADET, Bruno, 25700 VALENTIGNEY (FR)

(56) Documents cités:
- WO-A1-2014/191655
- FR-A1- 3 037 305

## Description

L'invention concerne les berceaux en aluminium qui sont fabriqués par extrusion (ou filage), usinage et soudage (ou ferrage), et destinés à équiper certains véhicules, éventuellement de type automobile.

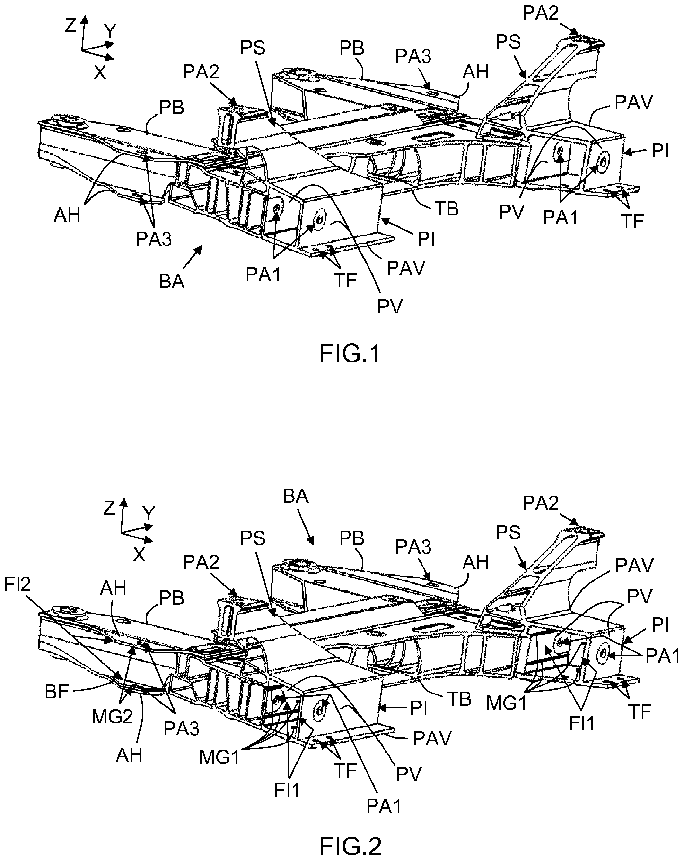

Comme le sait l'homme de l'art, certains véhicules, généralement de type automobile, sont équipés d'un berceau en aluminium, généralement dans leur partie avant. Un exemple d'un tel berceau est illustré sur la figure 1.

On notera que sur cette figure 1, comme sur les autres figures, la direction X est la direction longitudinale du véhicule, laquelle est sensiblement parallèle aux côtés latéraux comportant les portières latérales, la direction Y est la direction transversale du véhicule, laquelle est perpendiculaire à la direction X, et la direction Z est la direction verticale du véhicule, laquelle est perpendiculaire aux directions longitudinale X et transversale Y.

Comme illustré, un berceau BA comprend une traverse TB extrudée, usinée, destinée à être installée dans un véhicule suivant la direction transversale Y, et comportant deux extrémités opposées entre elles et à chacune desquelles sont solidarisées fixement une pièce d'ancrage avant (ou « corne ») PAV et une prolonge (ou chape) arrière PB.

L'ancrage avant du berceau BA sur la caisse d'un véhicule se fait par l'intermédiaire des deux pièces d'ancrage avant PAV, droite et gauche. Chaque pièce d'ancrage avant PAV est extrudée suivant la direction transversale Y et comprend des parties inférieure PI et supérieure PS se prolongeant mutuellement. Chaque partie inférieure PI est solidarisée fixement à l'une des deux extrémités de la traverse TB via des cordons de soudure et comprend deux parois verticales PV munies de trous définissant un premier point d'ancrage PA1 (généralement appelé E1), suivant la direction longitudinale X, pour l'ancrage d'une partie avant d'un triangle de roue (ou de suspension) via une vis. Chaque partie supérieure PS comprend des trous définissant un deuxième point d'ancrage vertical PA2 (généralement appelé X2) et destinés à être traversés par une vis couplée à une partie de la caisse.

L'ancrage arrière du berceau BA sur la caisse du véhicule se fait par l'intermédiaire des deux prolonges arrière PB, droite et gauche. Chaque prolonge arrière PB est extrudée et usinée afin de comprendre deux ailes horizontales AH munies de trous qui définissent un troisième point d'ancrage PA3 (généralement appelé E2), suivant la direction verticale Z, pour l'ancrage d'une partie arrière d'un triangle de roue.

Contrairement aux berceaux en acier dont le procédé d'emboutissage permet de créer au niveau des parois verticales PV et des ailes horizontales AH des bossages permettant un montage facile des triangles de roue sur un centrage court, le procédé d'extrusion des berceaux en aluminium ne permet pas de réaliser ces bossages. Par conséquent, l'engagement des parties avant et arrière de chaque triangle de roue, respectivement entre les parois verticales PV et les ailes horizontales AH, doit se faire sur une longueur plus importante, ce qui le rend notablement plus difficile à réaliser. Cette difficulté est plus particulièrement notable au niveau des parois verticales PV car une désorientation de la partie avant du triangle de roue ne serait-ce que de 1° par rapport à l'orientation de référence (lorsque le jeu est réduit), lors du pré-positionnement, peut entraîner un coincement lors de l'engagement.

Le document FR 3 037 305 A1 décrit un berceau selon le préambule de la revendication 1.

L'invention a donc notamment pour but d'améliorer la situation.

Elle propose à cet effet un berceau en aluminium, destiné à équiper un véhicule et comprenant une traverse s'étendant suivant une direction dite transversale, et comportant deux extrémités opposées entre elles et à chacune desquelles sont solidarisées fixement :
- une pièce d'ancrage avant extrudée suivant la direction transversale et comprenant deux parois verticales munies de trous définissant un point d'ancrage, suivant une direction dite longitudinale, perpendiculaire à la direction transversale, pour l'ancrage d'une partie avant d'un triangle de roue, et
- une prolonge arrière comprenant deux ailes horizontales munies de trous définissant un autre point d'ancrage, suivant une direction dite verticale, pour l'ancrage d'une partie arrière du triangle de roue.

Ce berceau se caractérise par le fait que l'une au moins des parois verticales de chaque pièce d'ancrage avant et les ailes horizontales de chaque prolonge arrière comprennent respectivement des premiers et seconds moyens de guidage qui guident respectivement les parties avant et arrière du triangle de roue correspondant pendant leurs positionnements respectifs par rapport aux deux points d'ancrage.

Grâce à ces premiers et seconds moyens de guidage, l'engagement des parties avant et arrière de chaque triangle de roue, respectivement entre les parois verticales et les ailes horizontales, est notablement facilité du fait que la probabilité de coincement est très faible.

Le berceau selon l'invention peut comporter d'autres caractéristiques qui peuvent être prises séparément ou en combinaison, et notamment :
- les premiers moyens de guidage peuvent comprendre au moins une première nervure transversale définie suivant la direction transversale à un premier niveau prédéfini sur une face interne de l'une au moins des parois verticales de chaque pièce d'ancrage avant, dans une phase d'extrusion de cette dernière ;
   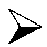 les premiers moyens de guidage peuvent comprendre au moins une seconde nervure transversale définie suivant la direction transversale à un second niveau, espacé du premier niveau d'une distance prédéfinie, sur la face interne de l'une au moins des parois verticales de chaque pièce d'ancrage avant, dans une phase d'extrusion de cette dernière ;
- les parois verticales de chaque pièce d'ancrage avant peuvent comprendre chacune une face interne sur laquelle est définie une partie au moins des premiers moyens de guidage ;
- les seconds moyens de guidage peuvent être des chanfreins définis sur des bords de faces internes des ailes horizontales de chaque prolonge arrière, dans une phase d'extrusion de cette dernière ;
   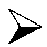 chaque chanfrein peut être incliné par rapport à sa face interne d'un angle compris entre 20° et 40°. Par exemple, chaque chanfrein peut être incliné par rapport à sa face interne d'un angle qui est égal à 25°.

L'invention propose également un véhicule, éventuellement de type automobile, et comprenant un berceau en aluminium du type de celui présenté ci-avant.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue en perspective, un exemple de réalisation d'un berceau en aluminium de l'art antérieur, avant le couplage de trains de roue,
- la figure 2 illustre schématiquement, dans une vue en perspective, un premier exemple de réalisation d'un berceau en aluminium selon l'invention, avant le couplage de trains de roue,
- la figure 3 illustre schématiquement, dans une vue en coupe dans un plan ZY, une partie d'une prolonge arrière après la phase d'extrusion et avant la phase d'usinage,
- la figure 4 illustre schématiquement, dans une vue en coupe dans le plan ZY, la partie de la prolonge arrière de la figure 3 après la phase d'usinage, et
- la figure 5 illustre schématiquement, dans une vue en coupe dans le plan ZX, une partie gauche d'un second exemple de réalisation d'un berceau en aluminium, après le couplage partiel d'un train de roue gauche.

L'invention a notamment pour but de proposer un berceau en aluminium BA destiné à équiper un véhicule et permettant un engagement facile des parties avant PVT et arrière PRT des trains de roue.

Dans ce qui suit, on considère, à titre d'exemple non limitatif, que le véhicule est de type automobile. Il s'agit, par exemple, d'une voiture. Mais l'invention n'est pas limitée à ce type de véhicule. Elle concerne en effet tout type de véhicule comprenant un berceau en aluminium destiné à faire partie d'un ensemble de train avant et à participer au support de triangles de roue et d'autres équipements, comme par exemple la direction, la barre anti-devers, des montages de roue par la fixation triangle et biellette de barre anti-devers, des éléments de support d'échappement, ou le carter d'insonorisation.

On a schématiquement illustré sur la figure 2 un exemple de réalisation d'un berceau en aluminium BA selon l'invention. Comme illustré, ce berceau (en aluminium) BA comprend une traverse TB extrudée, usinée et destinée à être installée dans un véhicule suivant la direction transversale Y. Cette traverse TB comprend deux extrémités opposées entre elles et à chacune desquelles sont solidarisées fixement une pièce d'ancrage avant (ou corne) PAV et une prolonge (ou chape) arrière PB.

L'ancrage avant du berceau BA sur la caisse d'un véhicule se fait par l'intermédiaire des deux pièces d'ancrage avant PAV, droite et gauche. Chaque pièce d'ancrage avant PAV est extrudée suivant la direction transversale Y et comprend une partie inférieure PI et une partie supérieure PS qui se prolongent mutuellement.

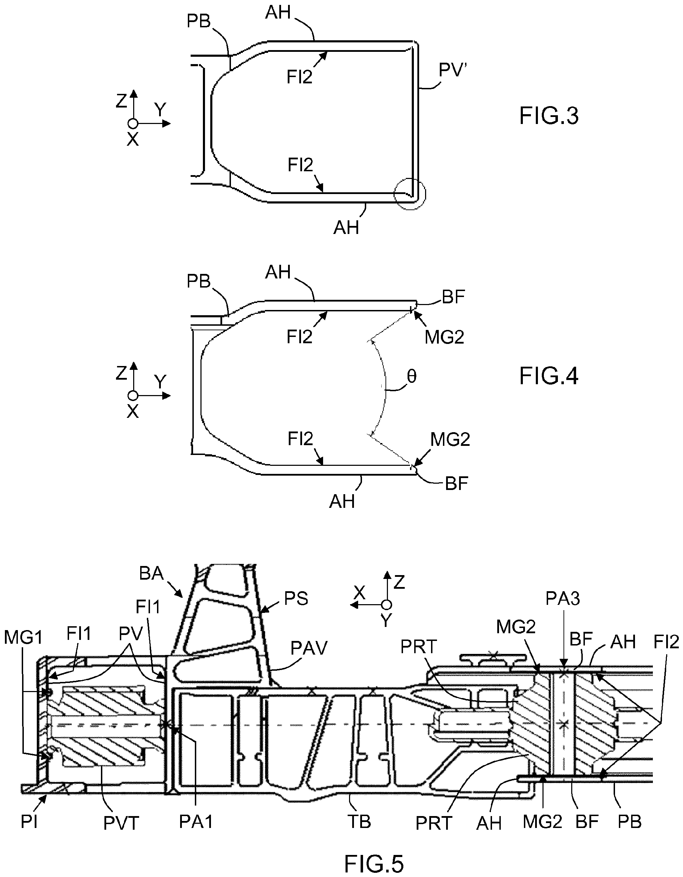

Chaque partie inférieure PI est solidarisée fixement à l'une des deux extrémités de la traverse TB via des cordons de soudure et comprend deux parois verticales PV sensiblement parallèles entre elles et munies de trous qui définissent un premier point d'ancrage PA1 (ou point E1), suivant la direction longitudinale X, pour l'ancrage d'une partie avant PVT d'un triangle de roue (ou de suspension) via une vis ou un boulon (voir figure 5). Par ailleurs, chaque partie inférieure PI peut comprendre des trous TF destinés à permettre la solidarisation fixe par vissage de prolonges servant à absorber au moins partiellement les chocs subis sur la face avant du véhicule.

Chaque partie supérieure PS comprend des trous qui définissent un deuxième point d'ancrage vertical PA2 (ou point X2) et destinés à être traversés par une vis ou un boulon couplé(e) à une partie de la caisse du véhicule.

L'ancrage arrière du berceau BA sur la caisse du véhicule se fait par l'intermédiaire des deux prolonges arrière PB, droite et gauche. Chaque prolonge arrière PB est extrudée et usinée afin de comprendre deux ailes horizontales AH munies de trous qui définissent un troisième point d'ancrage PA3 (ou point E2), suivant la direction verticale Z, pour l'ancrage d'une partie arrière PRT d'un triangle de roue via une vis ou un boulon (voir figure 5).

Dans ce qui suit et ce qui précède les notions « d'avant » et « d'arrière » sont relatives à l'extrémité avant du véhicule. Par conséquent, un élément avant est orienté vers l'extrémité avant du véhicule, tandis qu'un élément arrière est orienté vers l'extrémité arrière du véhicule.

Selon l'invention, l'une au moins des deux parois verticales PV de chaque pièce d'ancrage avant PAV comprend des premiers moyens de guidage MG1 qui guident la partie avant PVT du triangle de roue correspondant pendant son positionnement par rapport au premier point d'ancrage PA1, et les deux ailes horizontales AH de chaque prolonge arrière PB comprennent des seconds moyens de guidage MG2 qui guident la partie arrière PRT de ce même triangle de roue correspondant pendant son positionnement par rapport au troisième point d'ancrage PA3.

En d'autres termes, lorsque l'on engage la partie avant PVT d'un triangle de roue dans la pièce d'ancrage avant PAV correspondante, les premiers moyens de guidage MG1 que comprend l'une au moins des deux parois verticales PV de cette dernière (PAV) guident cette partie avant PVT vers la position permettant son couplage à la vis longitudinale qui est utilisée au niveau du premier point d'ancrage PA1. De même, lorsque l'on engage la partie arrière PRT de ce même triangle de roue entre les deux ailes horizontales AH de la prolonge arrière PB correspondante, les seconds moyens de guidage MG2 que comprennent ces deux ailes horizontales AH guident cette partie arrière PRT vers la position permettant son couplage à la vis verticale qui est utilisée au niveau du troisième point d'ancrage PA3.

Par exemple, et comme illustré non limitativement sur les figures 2 et 5, les premiers moyens de guidage MG1 peuvent comprendre au moins une première nervure transversale définie suivant la direction transversale Y à un premier niveau prédéfini sur une face interne FI1 de l'une au moins des parois verticales PV de chaque pièce d'ancrage avant PAV.

Chaque première nervure transversale MG1 est avantageusement définie dans la phase d'extrusion de sa pièce d'ancrage avant PAV. Par ailleurs, chaque première nervure transversale MG1 est de préférence définie dans une partie inférieure d'une face interne FI1 d'une paroi verticale PV, afin de permettre à la partie avant PVT du triangle de roue de glisser dessus, ce qui par ailleurs soulage le technicien qui est en charge de l'engagement de ce triangle de roue.

Comme illustré non limitativement sur les figures 2 et 5, les premiers moyens de guidage MG1 peuvent aussi comprendre au moins une seconde nervure transversale définie suivant la direction transversale Y à un second niveau, espacé du premier niveau d'une distance prédéfinie, sur la face interne FI1 de l'une au moins des parois verticales PV de chaque pièce d'ancrage avant PAV.

Chaque seconde nervure transversale MG1 est avantageusement définie dans la phase d'extrusion de sa pièce d'ancrage avant PAV. Par ailleurs, chaque seconde nervure transversale MG1 est de préférence définie dans une partie supérieure d'une face interne FI1 d'une paroi verticale PV.

Dans les exemples illustrés non limitativement sur les figures 2 et 5, les première et seconde nervures transversales MG1 sont définies sur une même face interne FI1 d'une paroi verticale PV d'une pièce d'ancrage avant PAV. Mais cela n'est pas obligatoire. En effet, on pourrait avoir une première nervure transversale MG1 définie dans une partie inférieure de la face interne FI1 de l'une des parois verticales PV d'une pièce d'ancrage avant PAV, et une seconde nervure transversale MG1 définie dans une partie supérieure de la face interne FI1 de l'autre paroi verticale PV de cette même pièce d'ancrage avant PAV.

On notera, comme illustré non limitativement sur la figure 2, que les deux parois verticales PV de chaque pièce d'ancrage avant PAV peuvent comprendre chacune une face interne FI1 sur laquelle est définie une partie au moins des premiers moyens de guidage MG1. Plus précisément, dans cet exemple de réalisation chacune des deux parois verticales PV de chaque pièce d'ancrage avant PAV comprend des première et seconde nervures transversales MG1 sur sa face interne FI1. Mais dans une variante de réalisation, chacune des deux parois verticales PV de chaque pièce d'ancrage avant PAV pourrait ne comprendre qu'une première nervure transversale MG1 sur sa face interne FI1.

On comprendra que les nervures transversales MG1 servent également de repère visuel au technicien pour limiter l'angle de montage du triangle de roue, et ainsi limiter le phénomène « d'arcboutement » au niveau de la pièce d'ancrage avant PAV. L'engagement au niveau de la pièce d'ancrage avant PAV est donc notablement facilité du fait que la probabilité de coincement lié à l'angle d'engagement est très faible.

Les nervures transversales MG1 sont définies grâce à la présence de formes prévues spécifiquement dans la matrice d'extrusion.

Par exemple, et comme illustré non limitativement sur les figures 2 à 5, les seconds moyens de guidage MG2 peuvent être des chanfreins définis sur des bords BF de faces internes FI2 des deux ailes horizontales AH de chaque prolonge arrière PB, dans une phase d'extrusion de cette dernière (PB). Ces chanfreins MG2 sont définis grâce à la présence de formes prévues spécifiquement dans la matrice d'extrusion. Le résultat de la phase d'extrusion d'une prolonge arrière PB apparaît partiellement sur la figure 3 (pour ce qui concerne la partie comprenant les ailes horizontales AH). Comme on peut l'observer, à ce stade les chanfreins MG2 sont définis à l'interface entre les parois horizontales qui définissent les ailes horizontales AH et la paroi verticale PV' qui relie temporairement ces dernières (AH).

Ensuite, lors de la phase d'usinage de cette prolonge arrière PB la paroi verticale PV' est supprimée, ce qui définit les bords BF contenant les chanfreins MG2. Ces chanfreins MG2, qui remplacent des arêtes vives, facilitent notablement l'engagement de la partie arrière PRT d'un train de roue dans la prolonge arrière PB correspondante.

On notera que la réalisation des chanfreins MG2 après la phase d'extrusion, et donc pendant la phase d'usinage, pourrait être envisagée. Mais cette opération s'avère longue à réaliser et trop onéreuse.

Par exemple, chaque chanfrein MG2 peut être incliné par rapport à sa face interne FI2 d'un angle qui est compris entre 20° et 40°. C'est en fait l'épaisseur des ailes qui limite le chanfrein MG2 pour des raisons de faisabilité.

Ainsi, chaque chanfrein MG2 peut être incliné par rapport à sa face interne FI2 d'un angle égal à 25° +/- 5°. C'est notamment le cas dans l'exemple illustré non limitativement sur les figures 3 et 4. En effet, l'angle θ entre les deux chanfreins opposés, définis sur les bords BF des deux ailes horizontales AH, est ici égal à 50° (soit 25° + 25°).

Grâce à l'invention, le technicien peut pré-positionner en altitude (Z) les parties avant PVT et arrière PRT d'un triangle de roue par rapport aux premier PA1 et troisième PA3 points d'ancrage du berceau BA, en utilisant les premiers MG1 et seconds MG2 moyens de guidage comme repères physiques et visuels. Puis, il engage les parties avant PVT et arrière PRT du triangle de roue dans le berceau BA en translatant ce triangle de roue par rapport à ce dernier (BA) suivant l'axe transversal Y, en étant guidé par les premiers MG1 et seconds MG2 moyens de guidage.

L'invention permet d'améliorer notablement l'engagement des triangles de roue dans un berceau en aluminium BA sans augmenter le jeu entre les parois verticales PV de chaque pièce d'ancrage avant PAV. En outre, cela évite d'avoir à augmenter les efforts de vissage qui sont induits par une augmentation du jeu précité du fait de l'obligation de rapprocher les parois verticales en utilisant des vis et des écrous surdimensionnés.

## Revendications

1. Berceau (BA) en aluminium, destiné à équiper un véhicule et comprenant une traverse (TB) s'étendant suivant une direction transversale et comportant deux extrémités opposées entre elles et à chacune desquelles sont solidarisées fixement i) une pièce d'ancrage avant (PAV) extrudée suivant ladite direction transversale et comprenant deux parois verticales (PV) munies de trous définissant un point d'ancrage (PA1), suivant une direction longitudinale perpendiculaire à ladite direction transversale, pour l'ancrage d'une partie avant (PVT) d'un triangle de roue, et ii) une prolonge arrière (PB) comprenant deux ailes horizontales (AH) munies de trous définissant un autre point d'ancrage (PA3), suivant une direction verticale, pour l'ancrage d'une partie arrière (PRT) dudit triangle de roue, **caractérisé en ce que** l'une au moins desdites parois verticales (PV) de chaque pièce d'ancrage avant (PAV) et lesdites ailes horizontales (AH) de chaque prolonge arrière (PB) comprennent respectivement des premiers (MG1) et seconds (MG2) moyens de guidage guidant respectivement lesdites parties avant (PVT) et arrière (PRT) du triangle de roue correspondant pendant leurs positionnements respectifs par rapport auxdits points d'ancrage (PA1, PA3).

2. Berceau selon la revendication 1, **caractérisé en ce que** lesdits premiers moyens de guidage (MG1) comprennent au moins une première nervure transversale définie suivant ladite direction transversale à un premier niveau prédéfini sur une face interne (FI1) de l'une au moins desdites parois verticales (PV) de chaque pièce d'ancrage avant (PAV), dans une phase d'extrusion de cette dernière (PAV).

3. Berceau selon la revendication 2, **caractérisé en ce que** lesdits premiers moyens de guidage (MG1) comprennent au moins une seconde nervure transversale définie suivant ladite direction transversale à un second niveau, espacé dudit premier niveau d'une distance prédéfinie, sur ladite face interne (FI1) de l'une au moins desdites parois verticales (PV) de chaque pièce d'ancrage avant (PAV), dans une phase d'extrusion de cette dernière (PAV).

4. Berceau selon l'une des revendications 1 à 3, **caractérisé en ce que** lesdites parois verticales (PV) de chaque pièce d'ancrage avant (PAV) comprennent chacune une face interne (FI1) sur laquelle est définie une partie au moins desdits premiers moyens de guidage (MG1).

5. Berceau selon l'une des revendications 1 à 4, **caractérisé en ce que** lesdits seconds moyens de guidage (MG2) sont des chanfreins définis sur des bords (BF) de faces internes (FI2) desdites ailes horizontales (AH) de chaque prolonge arrière (PB), dans une phase d'extrusion de cette dernière (PB).

6. Berceau selon la revendication 5, **caractérisé en ce que** chaque chanfrein (MG2) est incliné par rapport à sa face interne (FI2) d'un angle compris entre 20° et 40°.

7. Berceau selon la revendication 6, **caractérisé en ce que** chaque chanfrein (MG2) est incliné par rapport à sa face interne (FI2) d'un angle égal à 25°.

8. Véhicule, **caractérisé en ce qu'**il comprend un berceau (BA) selon l'une des revendications précédentes.

9. Véhicule selon la revendication 8, **caractérisé en ce qu'**il est de type automobile.

## Patentansprüche

1. Träger (BA) aus Aluminium, der dazu bestimmt ist, ein Fahrzeug auszustatten, und der einen Querträger (TB) umfasst, der sich entlang einer Querrichtung erstreckt und zwei einander entgegengesetzte Enden umfasst, und an welchen jeweils fest i) ein vorderes Verankerungsteil (PAV) verbunden ist, das entlang der Querrichtung extrudiert ist und zwei vertikale Wände (PV) umfasst, die mit Löchern versehen sind, die eine Verankerungsstelle (PA1) entlang einer Längsrichtung senkrecht zu der Querrichtung für die Verankerung eines Vorderteils (PVT) eines Radträgers definieren, und ii) eine hintere Verlängerung (PB), die zwei horizontale Flügel (AH) umfasst, die mit Löchern versehen sind, die eine andere Verankerungsstelle (PA3) entlang einer vertikalen Richtung für die Verankerung eines Hinterteils (PRT) des Radträgers definieren, **dadurch gekennzeichnet, dass** mindestens eine der vertikalen Wände (PV) jedes vorderen Verankerungsteils (PAV) und die horizontalen Flügel (AH) jeder hinteren Verlängerung (PB) jeweils erste (MG1) und zweite (MG2) Führungsmittel umfassen, die jeweils den vorderen Teil (PVT) und den hinteren Teil (PRT) des entsprechenden Radträgers während ihrer jeweiligen Positionierungen in Bezug auf die Verankerungsstellen (PA1, PA3) führen.

2. Träger nach Anspruch 1, **dadurch gekennzeichnet, dass** die ersten Führungsmittel (MG1) mindestens eine erste Querrippe umfassen, die entlang der Querrichtung an einem ersten vordefinierten Niveau auf einer Innenfläche (FI1) mindestens einer der vertikalen Wände (PV) jedes vorderen Verankerungsteils (PAV) in einer Extrusionsphase dieses Letzteren (PAV) definiert ist.

3. Träger nach Anspruch 2, **dadurch gekennzeichnet, dass** die ersten Führungsmittel (MG1) mindestens eine zweite Querrippe umfassen, die entlang der Querrichtung an einem zweiten Niveau, das von dem ersten Niveau um einen vorbestimmten Abstand beabstandet ist, auf der Innenfläche (FI1) mindestens einer der vertikalen Wände (PV) jedes vorderen Verankerungsteils (PAV) in einer Extrusionsphase dieses Letzteren (PAV) definiert ist.

4. Träger nach einem der Ansprüche 1 bis 3, **dadurch gekennzeichnet, dass** die vertikalen Wände (PV) jedes vorderen Verankerungsteils (PAV) jeweils eine Innenfläche (FI1) 1 umfassen, auf der mindestens ein Teil der ersten Führungsmittel (MG1) definiert ist.

5. Träger nach einem der Ansprüche 1 bis 4, **dadurch gekennzeichnet, dass** die zweiten Führungsmittel (MG2) Abfasungen sind, die auf Rändern (BF) von Innenflächen (FI2) der horizontalen Flügel (AH) jeder hinteren Verlängerung (PB) in einer Extrusionsphase dieser Letzteren (PB) definiert sind.

6. Träger nach Anspruch 5, **dadurch gekennzeichnet, dass** jede Abfasung (MG2) in Bezug auf ihre Innenfläche (FI2) um einen Winkel zwischen 20° und 40° geneigt ist.

7. Träger nach Anspruch 6, **dadurch gekennzeichnet, dass** jede Abfasung (MG2) in Bezug auf ihre Innenfläche (FI2) um einen Winkel gleich 25° geneigt ist.

8. Fahrzeug, **dadurch gekennzeichnet, dass** es einen Träger (BA) nach einem der vorstehenden Ansprüche umfasst.

9. Fahrzeug nach Anspruch 8, **dadurch gekennzeichnet, dass** es vom Typ Kraftfahrzeug ist.

## Claims

1. An aluminium cradle (BA), intended to equip a vehicle and including a crossmember (TB) extending along a transverse direction and comprising two ends which are opposite with respect to one another and at each of which there are fixedly secured i) an extruded front anchoring part (PAV) along said transverse direction and including two vertical walls (PV) provided with holes defining an anchoring point (PA1), along a longitudinal direction perpendicular to said transverse direction, for the anchoring of a front part (PVT) of a wheel carrier, and ii) a rear extension (PB) including two horizontal wings (AH) provided with holes defining another anchoring point (PA3), along a vertical direction, for the anchoring of a rear part (PRT) of said wheel carrier, **characterized in that** at least one of said vertical walls (PV) of each front anchoring part (PAV) and said horizontal wings (AH) of each rear extension (PB) include respectively first (MG1) and second (MG2) guiding means, guiding respectively said front parts (PVT) and rear parts (PRT) of the corresponding wheel carrier during their respective positionings with respect to said anchoring points (PA1, PA3).

2. The cradle according to Claim 1, **characterized in that** said first guiding means (MG1) include at least one defined first transverse rib along said transverse direction at a first predefined level on an internal face (FI1) of at least one of said vertical walls (PV) of each front anchoring part (PAV), in an extrusion phase of the latter (PAV).

3. The cradle according to Claim 2, **characterized in that** said first guiding means (MG1) include at least one defined second transverse rib along said transverse direction at a second level, spaced apart from said first level by a predefined distance, on said internal face (FI1) of at least one of said vertical walls (PV) of each front anchoring part (PAV), in an extrusion phase of the latter (PAV).

4. The cradle according to one of Claims 1 to 3, **characterized in that** said vertical walls (PV) of each front anchoring part (PAV) each include an internal face (FI1) on which there is defined a portion at least of said first guiding means (MG1).

5. The cradle according to one of Claims 1 to 4, **characterized in that** said second guiding means (MG2) are defined chamfers on edges (BF) of internal faces (FI2) of said horizontal wings (AH) of each rear extension (PB), in an extrusion phase of the latter (PB) .

6. The cradle according to Claim 5, **characterized in that** each chamfer (MG2) is inclined with respect to its internal face (FI2) by an angle comprised between 20° and 40°.

7. The cradle according to Claim 6, **characterized in that** each chamfer (MG2) is inclined with respect to its internal face (FI2) by an angle equal to 25°.

8. A vehicle, **characterized in that** it includes a cradle (BA) according to one of the preceding claims.

9. The vehicle according to Claim 8, **characterized in that** it is of the automobile type.
